# FASCICULE DE BREVET EUROPEEN

(11) **EP 3 525 991 B1**
(45) Date de publication et mention de la délivrance du brevet: **04.11.2020**
(21) Numéro de dépôt: 17783920.6
(22) Date de dépôt: 20.09.2017
(51) Int. Cl.: B25J 9/00

(54) **DISPOSITIF PORTABLE DE SUPPORT DE CHARGE ELOIGNEE DE LA PERSONNE QUI LA PORTE**
WEARABLE-VORRICHTUNG ZUR STÜTZUNG EINER LAST WEG VOM KÖRPER DER PERSON, DIE SIE TRÄGT
WEARABLE DEVICE FOR SUPPORTING A LOAD AWAY FROM THE BODY OF THE INDIVIDUAL WEARING IT

(30) Priorité: 14.10.2016 FR 1659950
(43) Date de publication de la demande: 21.08.2019
(73) Titulaire: BMEXO, 13680 Lancon-Provence (FR)
(72) Inventeur: MOUSSION, Benjamin, 13680 Lancon-Provence (FR)
(74) Mandataire: Novagraaf Technologies
(86) Numéro de dépôt international: PCT/FR2017/052515
(87) Numéro de publication internationale: WO 2018/069594

(56) Documents cités:
- EP-A2- 2 995 284
- FR-A1- 2 978 690
- FR-A1- 3 016 821
- FR-A1- 3 031 060

## Description

La présente invention a pour objet un dispositif portable de support de charge éloignée de la personne qui la porte.

Le secteur technique de l'invention est celui de la fabrication de tels dispositifs porte-charges, en particulier quand celles-ci sont assez lourdes, et dont il existe de nombreuses catégories comme celle des exosquelettes.

Afin d'aider en effet une personne à porter une charge assez lourde à bout de bras et à distance de son corps, il est connu d'utiliser des dispositifs qui doivent d'une part reporter le poids de la charge (effort vertical) sur le corps de la personne en soulageant au maximum l'effort supporté par le bras de l'opérateur qui manipule la charge, et d'autre part compenser le porte à faux créé par l'éloignement de cette charge (effort horizontal) : pour cela il a été développé de nombreux dispositifs qui transfèrent essentiellement les efforts dûs au poids et au porte à faux de la charge sur le haut du corps de la personne.

On peut citer par exemple dans ce domaine la demande de brevet FR2978690 publiée le 8 février 2012 et qui décrit un exosquelette de levage et de portage de charges, composé d'un harnais dorsal confortablement harnaché au corps du travailleur de telle manière à repartir autant d'efforts que possible sur son buste, ses hanches et ses épaules par la mise en œuvre notamment d'une ceinture semi-rigide, d'un dossier suffisamment large, de bretelles, de vérins réglables, et d'une potence munie d'un câble au bout duquel pend un crochet où est accrochée la charge.

Dans le même domaine la demande de brevet WO2008031023 publiée le 13 mars 2008 décrit une structure d'exosquelette comportant une veste enveloppant les épaules et le buste de celui qui la porte et sur laquelle est fixé, au niveau d'une épaule, un bras articulé support de charge.

On pourrait ainsi citer de nombreux documents décrivant de tels exosquelettes pour diverses applications telles que de supporter des caméras, des outils de chantier, des armes ou autres charges dans le secteur militaire, etc... avec même suivant le cas des reprises d'efforts par des dispositifs articulés allant jusqu'au sol pour soulager les jambes du porteur, mais quel que soit le dispositif et l'application, l'ensemble des appareils existants transfèrent en premier le poids de l'appareil maintenu normalement à bout de bras sur le buste et les épaules de l'opérateur (et dans certains cas donc ce poids est ensuite repris jusqu'au sol par des systèmes doublant les jambes de celui-ci).

Cependant ce transfert se fait de manière hasardeuse et sollicite la colonne vertébrale et les muscles dorsaux tant en écrasement qu'en torsion, provoquant des troubles musculo-squelettiques, sans compter que ces dispositifs sont aussi complexes à réaliser et à mettre en œuvre.

Le problème posé est ainsi de développer un nouveau dispositif portable de support de charge, surtout quand celle-ci est assez lourde, et portée éloignée de la personne qui la porte, qui ne nécessite pas d'effort musculaire important de cette personne, et qui soit apte d'une part à reporter et à repartir sur le corps de ladite personne l'effort vertical dû au soulèvement ou au maintien de la charge sans passer par un écrasement ou tassement des vertèbres et d'autre part de répartir horizontalement l'effort dû au couple de portée ou de maintien sur une partie du haut du corps qui permette de maintenir le dos droit sans créer de tension musculaire traumatisante, tout en étant facile à réaliser et à mettre en œuvre.

Selon la présente invention, une solution au problème posé est un dispositif de support de charge tel que défini dans la revendication 1.

Celui-ci comporte au moins une ceinture, dont une partie est flexible et une partie dorsale est rigide, ladite ceinture étant équipée d'au moins une pièce d'accrochage rigide et solidaire de ladite partie dorsale rigide, et apte à supporter le poids de la dite charge, comme cela est du reste déjà connu pour porter des charges contre le corps de la personne tels que des sacs à dos, comme décrit par exemple dans le brevet FR2970628 publié le 27 juillet 2012, ou tels que des objets suspendus sous la ceinture comme des sceaux par leur anse ou une brouette par ses bras et comme décrit par exemple dans le brevet DE4140464 09 juin 1993.

Mais suivant la présente invention, la charge devant être portée éloignée de la personne, en porte-à-faux et par l'intermédiaire d'un support de type bras fixé à son extrémité proximale sur ladite pièce d'accrochage, le dispositif comporte au moins deux montants rigides plats et courbes, à la manière d'une spatule de ski, fixés à l'une de leur extrémité à la partie dorsale rigide de la ceinture, leur autre extrémité étant orientée vers le haut par rapport à celle-ci et dont la forme est apte à épouser et à s'appuyer sur la courbure lombaire de la personne de part et d'autre de sa colonne vertébrale.

Dans un mode préférentiel de réalisation le dispositif comporte au moins un élément rigide en forme de U inversé, fixé à ses deux extrémités à la partie dorsale rigide de la ceinture, entourant les deux au moins montants rigides courbes par le dessus, considéré en position droite d'utilisation, et apte à s'appuyer par une surface plane sur les muscles lombaires de la personne.

Le résultat est un nouveau dispositif qui répond au problème posé, et même si on ne peut pas considérer un tel dispositif comme un exosquelette puisqu'il ne double pas à proprement parlé le squelette humain pour augmenter ses capacités physiques, il permet bien à l'homme d'effectuer des efforts sans provoquer des troubles musculo-squelettiques ni créer de tension musculaire traumatisante: il reporte en effet directement l'effort vertical dû au soulèvement ou au maintien d'une charge portée par une personne sur les parties basses du corps humain les mieux adaptées et les moins sensibles, et qui sont sous la zone lombo-sacrée, sans passer par un écrasement ou tassement des vertèbres, et il répartit l'effort horizontal dû au couple de portée ou de maintien sur les parties hautes du corps humain en s'appuyant sur les muscles situés entre les omoplates et les hanches ce qui permet de maintenir le dos droit.

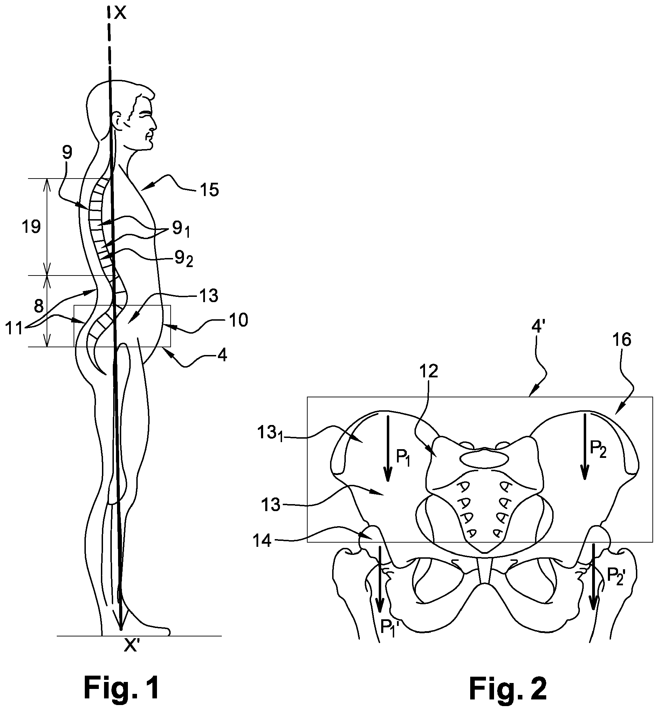

Ainsi, en considérant cependant le dispositif de l'invention comme un exosquelette, il permet une répartition de l'effort d'un objet normalement tenu à bout de bras comme suit, en se reportant à la figure 1:
- positionnement, maintien et appui autour des vertèbres lombaires 9₁ (sur les muscles lombaires 11 du bas du dos) suivant la courbure lombaire 8,
- effort anti-rotation autour et sur les vertèbres dorsales 9₂, soit sur et autour des muscles dorsaux du bas du dos et suivant la courbure dorsale 19 et sur ou sous les omoplates,
- effort vertical repris sur et autour des hanches 16 et transmis directement de l'os iliaque 13 aux articulations coxo-fémorales 14 sans solliciter le sacrum 12 et les articulations de celui-ci ; un tel appui sur la ceinture pelvienne réduit, si ce n'est annule, la charge portée par la colonne vertébrale 9 et en particulier les vertèbres lombaires 9₁.

Un tel nouveau dispositif portable suivant l'invention permet donc de supporter, soulever ou maintenir des charges assez lourdes éloignées de la personne qui les porte, sans trop d'effort ni trouble musculo-squelettique ni tension musculaire traumatisante, ce qui en montrent les avantages et en prouvent l'intérêt. La description et les figures ci-jointes en donnent un exemple de réalisation mais d'autres modes de réalisation sont possibles dans le cadre de la portée de la présente invention.
La figure 1 est une vue en coupe de profil d'un corps humain avec sa structure osseuse de maintien et d'appui vertical symbolisé par la flèche d'axe XX'.
La figure 2 est une vue de face des os de la ceinture pelvienne du squelette de la figure 1, et sur laquelle est représentée la zone 4' où est positionnée la ceinture du dispositif suivant l'invention avec la transmission du poids de la charge portée représenté par les quatre flèches P₁,P₁',P₂,P₂'.
La figure 3 est une vue en perspective de côté d'un dispositif suivant l'invention en situation opérationnelle sur une personne (l'opérateur) et complété par un bras 17 support d'une charge 18, qui ne fait pas partie de l'invention mais qui permet de bien comprendre, avec les autres figures et les présentes explications, comment sont repris les efforts par le dispositif de l'invention.
La figure 4 est une vue en perspective de trois quart de face d'un dispositif suivant l'invention tel que représenté en situation sur la figure 3.

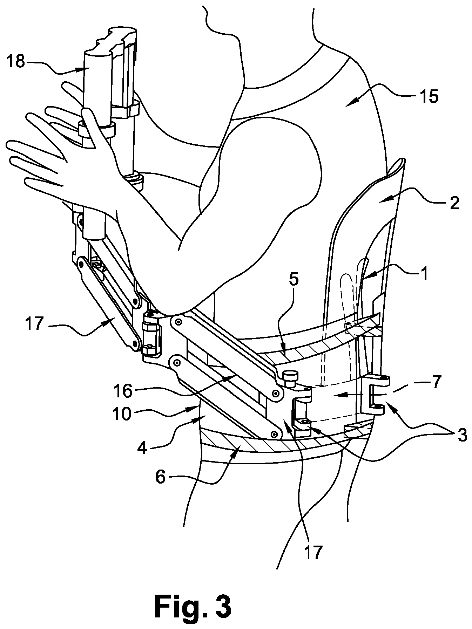

Comme représenté ainsi sur la figure 3, le dispositif portable de support de charge 18 éloignée de la personne 15 (l'opérateur) qui la porte, ou dit exosquelette, comporte au moins une ceinture 4 équipée d'au moins une pièce 3 d'accrochage apte à supporter le poids de la dite charge 18.

Suivant l'invention cette charge 18 devant être portée éloignée de la personne 15, en porte-à-faux et par l'intermédiaire d'un support tel qu'un bras 17 fixé à son extrémité proximale 17₁ sur la au moins pièce d'accrochage 3 qui est rigide et solidaire d'une partie rigide 7 dorsale de la ceinture 4, le dispositif comporte en outre :
- au moins deux montants rigides 1 plats et courbes, fixés à l'une de leur extrémité à la partie dorsale rigide 7 de la ceinture 4, leur autre extrémité libre étant orientée vers le haut par rapport à celle-ci et dont la forme est apte à épouser et à s'appuyer sur la courbure lombaire 8 et les muscles lombaires de la personne (l'opérateur) 15 de part et d'autre de sa colonne vertébrale 9,
- au moins un élément rigide 2 en forme de U inversé fixé à ses deux extrémités à la partie dorsale rigide 7 de la ceinture 4, entourant les premiers éléments rigides 1 par le dessus, en position droite d'utilisation, et apte à s'appuyer sur et autour des muscles lombaires de la personne 15.

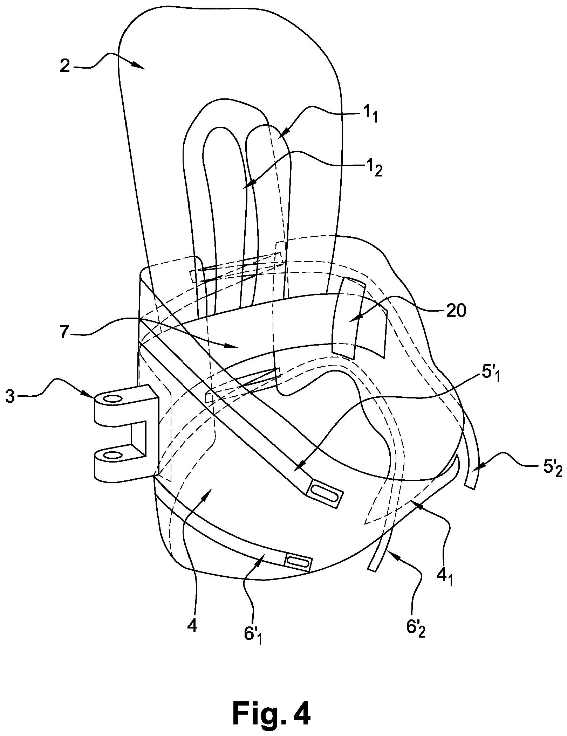

Tels que représentés sur la figure 4, les deux montants rigides 1 plats et courbes sont indépendants l'un de l'autre et forment deux éléments distincts, leur extrémité orientée vers le haut étant libre en forme de spatule, mais dans un autre mode de réalisations ces deux montants rigides 1 plats et courbes pourraient être reliés entre eux par leur extrémité orientée vers le haut pour constituer un seul élément en forme de U inversé dont la branche de liaison transversale formerait un pont apte à passer par-dessus et à contourner la colonne vertébrale 9 pour éviter tout appui sur celle-ci.

La ceinture 4 comporte une partie flexible réalisée au moins pour partie en matériau élastique et de plus elle comporte :
- sur le devant (considéré par rapport à l'opérateur 15) et afin de refermer la partie flexible de la ceinture 4, après en avoir passer ses deux extrémités autour de la taille de l'opérateur 15, ces deux extrémités pouvant se recouvrir l'une sur l'autre, un système de fermeture rapide et de maintien 4₁ permettant la mise en place de la ceinture 4 à la bonne position 4' autour de la taille de la personne (l'opérateur) 15, ce système de fermeture 4₁ se positionnant sur son abdomen,
- sur l'arrière (soit dans le dos de l'opérateur 15) la partie flexible de la ceinture étant de préférence constituée en deux parties, au moins une bande souple de serrage dit haute 5 et/ou basse 6 fixée aux deux bords, aptes ainsi à être positionnés dans le dos de la personne ou opérateur 15, de la partie flexible de la ceinture 4 par des anneaux, dans lesquels elle peut coulisser et entre lesquels elle se croise en passant d'un côté à l'autre de ces deux bords, ce qui permet de rapprocher ceux-ci en tirant sur la ou les bandes de serrage 5 et/ou 6 et de bien plaquer l'ensemble du dispositif contre le dos et la taille de l'opérateur 15,
- sur le devant, au moins un système 5' et/ou 6' de serrage de type à crémaillère apte à tirer sur les deux extrémités de chaque bande souple 5 et/ou 6 faisant le tour de la ceinture 4 par l'extérieur, quand la ceinture est positionnée autour de la taille,
   - un système de serrage dit haut 5₁',5₂' étant destiné à être positionné sur le haut de l'estomac 10 de la personne 15 et
   - un autre système de serrage dit bas 6₁',6₂' étant destiné à être positionné en-dessous de son abdomen 10,
   pour le maintien et un ajustement optimum de la ceinture 4 du dispositif au niveau de la taille de la personne 15 lors du soulèvement de la charge 18, avec les montants rigides courbés 1 prenant appui sur la courbure lombaire 8 autour de la colonne vertébrale 9 de l'opérateur 15,
- au moins une pièce rigide 3 d'accrochage apte à supporter le poids de la dite charge 18 transmis par tout support tel que le bras 17, fixée par boulonnage par exemple et positionnée en tout point de la partie dorsale rigide 7 de la ceinture 4, et de préférence au milieu du dos entre les deux bords des deux parties de la partie flexible de la ceinture ; et dans un mode particulier de réalisation tel que représenté sur la figure 3, la partie dorsale rigide 7 de la ceinture 4 comporte au moins trois pièces rigides 3 disposées par exemple l'une dans le dos de la ceinture 4 et/ou les deux autres de part et d'autre sur les côtés.

Les montants rigides plats et courbées 1₁ et 1₂ , l'élément rigide 2 en U, les pièces d'accrochage rigides 3 et la pièce dorsale rigide 7 sont liées mécaniquement et solidaires ; cette pièce dorsale rigide 7 est située et glissée dans de larges passants 20 du côté intérieur de la partie flexible de la ceinture 4, quand celle-ci est positionnée autour de la taille de l'opérateur 15, et elle est de préférence recouverte d'un matériau souple de type mousse, comme du reste les montants 1₁ et 1₂ et l'élément 2 en U qui lui sont liés. Chaque pièce d'accrochage rigide 3 devant dépasser vers l'extérieur pour permettre la fixation du support 17 de charge est liée à la pièce dorsale rigide 7 à travers une ouverture dans la partie flexible de la ceinture 4.

L'ensemble permet une répartition :
- de l'effort verticalement sur et autour de l'os iliaque 13 via la fixation 3 du support 17 de charge 18 ainsi que via la ceinture 4 et ses systèmes de serrage et d'ajustement à crémaillères 5 et 6, et
- de l'effort horizontal, du au couple engendré par la charge 18 sur la pièce support d'accrochage 3, sur les muscles lombaires 11 via les pièces rigides courbées 1, ainsi qu'en moindre mesure autour de ces muscles 11 par la pièce rigide 2 en U, celle-ci permettant d'améliorer l'équilibre en ne reprenant qu'une petite partie de la charge.

Lorsque l'opérateur souhaite soulever une charge 18, l'ensemble de l'effort est ainsi repris via le support tel qu'un bras 17, comme un porte-charge, un porte-outil, un porte-patient (pour des applications médicales) ou autre, sur la pièce d'accrochage 3 qui peut être de formes diverses, située à n'importe quel endroit et reliée de manière rigide à la partie rigide fixe 7 de la ceinture 4.

Lorsque la charge 18 est positionnée en face de l'opérateur 15, l'effort résultant est repris au niveau de la ceinture 4, ce qui correspond à un couple tendant à faire basculer l'opérateur 15 en avant.

Le système de maintien 4₁ permet une première mise en place rapide (par scratch ou autre) de la ceinture 4 en position correcte, c'est-à-dire les pièces 1 sur la courbure lombaire 8 autour de la colonne vertébrale 9.

Les formes des pièces 1 et 2 permettent une mise en place naturelle sur le corps, autour de la colonne vertébrale 9, et chacun des deux systèmes complémentaires de serrage 5 et/ou 6 permet un ajustement parfait à tout type de morphologie, et d'autant plus avec les deux systèmes de serrage :
- la bande 6 avec son système de serrage bas 6' est placé en pince taille au-dessus des ailes iliaques 13₁, sous l'abdomen afin de maintenir la ceinture plaquée sur et autour de l'os iliaque 13 sans occasionner de gêne ou d'appui contraignant sur l'estomac 10 et l'abdomen de la personne 15, et cet ensemble de serrage bas 6, 6' permet de reprendre une partie des efforts générés par le couple de la charge transféré sur la fixation 3 et de maintenir la partie rigide de la ceinture composée des pièces 2 et 7 verticalement et de rendre le système stable sur et autour de l'os iliaque 13,
- la bande 5 avec son système de serrage haut 5 est placé sur le haut de l'estomac 10 et sert à stabiliser la ceinture sur le corps de l'opérateur ; en combinaison avec l'ensemble de serrage bas 6,6' et avec le système de maintien 4₁, il réduit ou supprime l'angle de la ceinture 4 par rapport à l'horizontale en cas de charge 18 déportée de l'axe de l'opérateur 15 (à droite ou à gauche).

Afin de préserver la partie haute du corps, l'exosquelette développé suivant l'invention permet de répartir l'ensemble du couple selon les axes verticaux et horizontaux sur les parties du corps prévues à cet effet et de maintenir le dos droit de par la forme des pièces 1, 2 et 7.

L'effort vertical du poids de la charge 18 déportée est entièrement repris par ces pièces 1, 2 et 7 du dispositif, et directement transmis P₁,P₂ sur et autour de l'os iliaque 13 lié P₁',P₂' à l'articulation coxo-fémorale 14.

L'effort horizontal est repris en majorité par les pièces 1 sur la courbure lombaire 8 puis stabilisé par un léger appui dans le dos par la pièce 2, permettant également un maintien naturel droit du dos.

De par sa conception, l'exosquelette réduit les efforts sur les bras, épaules, dos et colonne vertébrale pour les transmettre sur et sous la courbure lombaire 8, aux endroits du corps humain prévus pour supporter des charges.

L'objectif est la réduction des troubles musculo squelettiques pour toute action répétitive et/ou de déplacement de charge obligeant un opérateur sans exosquelette à forcer sur le haut du corps et/ou devant prendre des positions contraignantes non naturelles pour le corps.

Les applications envisagées sont :
- le maintien d'un outil en position pour des opérations de collage, perçage, soudage, rivetage, disquage,... : l'exosquelette permet ici de maintenir la charge de l'outil sur la ceinture 4 et de soulager les bras et le dos de la personne 15 (l'opérateur) qui le porte,
- la mise en place d'outils lourds pour des opérations automatiques de perçage, taraudage, rivetage,... : l'exosquelette permet ici d'amortir et de maintenir la charge de l'outil sur la ceinture 4 et de soulager les bras et le dos de l'opérateur 15,
- le déplacement de charge ou de personne : l'exosquelette permet ici de répartir l'effort de déplacement ou de soulèvement sur la ceinture 4 et de soulager les bras et le dos de l'opérateur 15.

## Revendications

1. Dispositif de support de charge (18) par une personne (15), comportant au moins une ceinture (4), dont une partie est flexible et une partie dorsale (7) est rigide, laquelle ceinture (4) étant équipée d'au moins une pièce d'accrochage (3) rigide et solidaire de ladite partie dorsale rigide (7), ladite pièce d'accrochage (3) étant apte à supporter le poids de la dite charge (18), celle-ci devant être portée éloignée de la personne (15), en porte-à-faux et par l'intermédiaire d'un support (17) fixé à son extrémité proximale (17₁) sur ladite pièce d'accrochage (3) le dispositif comportant au moins deux montants rigides (1) plats et courbes, fixés à l'une de leur extrémité à la partie dorsale rigide (7) de la ceinture (4), leur autre extrémité étant orientée vers le haut par rapport à celle-ci, et dont la forme est apte à épouser et à s'appuyer sur la courbure lombaire (8) de la personne (15) de part et d'autre de sa colonne vertébrale (9).

2. Dispositif suivant la revendication 1 **caractérisé en ce qu'**il comporte au moins un élément rigide (2) en forme de U inversé fixé à ses deux extrémités à la partie dorsale rigide (7) de la ceinture (4), entourant les premiers éléments rigides (1) par le dessus, en position droite d'utilisation, et apte à s'appuyer sur les muscles lombaires de la personne (15).

3. Dispositif suivant l'une quelconque des revendications 1 ou 2, **caractérisé en ce que** la partie flexible de la ceinture (4) est réalisée au moins pour partie en matériau élastique et comporte un système de fermeture rapide et de maintien (4₁) permettant la mise en place de la ceinture (4) à la bonne position (4') autour de la taille de la personne (15).

4. Dispositif suivant l'une quelconque des revendications 1 à 3, **caractérisé en ce que** la ceinture (4) comporte au moins une bande (5) souple avec un système (5') de serrage haut (5) destiné à être positionné sur le haut de l'estomac (10) de la personne (15).

5. Dispositif suivant l'une quelconque des revendications 1 à 4, **caractérisé en ce que** la ceinture (4) comporte au moins une bande (6) souple avec un système (6') de serrage bas (6) destiné à être positionné en-dessous de l'abdomen de la personne (15) .

6. Dispositif suivant l'une quelconque des revendications 4 ou 5 **caractérisé en ce que** la partie flexible de la ceinture (4) est constituée en deux parties, et au moins une bande souple de serrage (5 ou 6) fixée aux deux bords, aptes à être positionnés dans le dos de la personne (15), de la partie souple de la ceinture (4) par des anneaux dans lesquels elle peut coulisser et entre lesquels elle se croise en passant d'un côté à l'autre de ces deux bords.

7. Dispositif suivant l'une quelconque des revendications 1 à 6 **caractérisé en ce que** la ceinture (4) comporte au moins trois pièces rigides(3) d'accrochage aptes à supporter le poids de la dite charge (18), l'une située dans le dos de la ceinture (4) et les deux autres de part et d'autre sur les côtés.

8. Dispositif suivant l'une quelconque des revendications 1 à 7, caractérisé en ce les deux montants rigides (1) plats et courbes sont reliés entre eux par leur extrémité orientée vers le haut pour constituer un seul élément en forme de U inversé dont la branche de liaison transversale forme un pont apte à passer par-dessus et à contourner la colonne vertébrale (9).

9. Dispositif suivant l'une quelconque des revendications 1 à 7, **caractérisé en ce que** les deux montants rigides (1) plats et courbes sont indépendants l'un de l'autre et forment deux éléments distincts, leur extrémité orientée vers le haut étant libre en forme de spatule.

## Patentansprüche

1. Vorrichtung zur Stützung einer Last (18) durch eine Person (15), umfassend mindestens einen Gurt (4), von dem ein Teil biegsam und ein Rückenteil (7) starr ist, wobei der Gurt (4) mit mindestens einem starren Befestigungsstück (3), das fest an dem starren Rückenteil (7) befestigt ist, ausgerüstet ist, wobei das Befestigungsstück (3) fähig ist, das Gewicht der Last (18) zu stützen, wobei diese weg von der Person (15) getragen werden muss, freitragend und mit Hilfe einer Stütze (17), welche an ihrem proximalen Ende (17₁) an dem Befestigungsstück (3) angebracht ist, wobei die Vorrichtung mindestens zwei flache und gekrümmte starre Stangen (1) umfasst, deren eines Ende an dem starren Rückenteil (7) des Gurts (4) angebracht ist, deren anderes Ende in Bezug auf diesen nach oben hin ausgerichtet ist und deren Form fähig ist, sich der Lendenkrümmung (8) der Person (15) anzupassen und sich auf beiden Seiten ihrer Wirbelsäule (9) an dieser abzustützen.

2. Vorrichtung nach Anspruch 1, **dadurch gekennzeichnet, dass** sie mindestens ein starres Element (2) in Form eines umgekehrten Us umfasst, das an seinen beiden Enden an dem starren Rückenteil (7) des Gurts (4) angebracht ist, das bei aufrechter Gebrauchsstellung die ersten starren Elemente (1) von oben umgibt und das fähig ist, sich an den Lendenmuskeln der Person (15) abzustützen.

3. Vorrichtung nach einem der Ansprüche 1 oder 2, **dadurch gekennzeichnet, dass** der biegsame Teil des Gurts (4) mindestens teilweise aus einem elastischen Material hergestellt ist und ein Schnellverschluss- und Haltesystem (4₁) umfasst, das das Anlegen des Gurts (4) in der korrekten Position (4') um die Taille der Person (15) herum ermöglicht.

4. Vorrichtung nach einem der Ansprüche 1 bis 3, **dadurch gekennzeichnet, dass** der Gurt (4) mindestens ein flexibles Band (5) mit einem System (5') zum Spannen oben (5) umfasst, das dazu bestimmt ist, oberhalb des Magens (10) der Person (15) positioniert zu werden.

5. Vorrichtung nach einem der Ansprüche 1 bis 4, **dadurch gekennzeichnet, dass** der Gurt (4) mindestens ein flexibles Band (6) mit einem System (6') zum Spannen unten (6) umfasst, das dazu bestimmt ist, unterhalb des Unterleibs der Person (15) positioniert zu werden.

6. Vorrichtung nach einem der Ansprüche 4 oder 5, **dadurch gekennzeichnet, dass** der biegsame Teil des Gurts (4) aus zwei Teilen besteht und mindestens ein flexibles Spannband (5 oder 6) mit Hilfe von Ringen an den beiden Rändern, die im Rücken der Person (15) positioniert werden können, des flexiblen Teils des Gurts (4) angebracht ist, in denen es gleiten kann und zwischen denen es sich kreuzt und dabei von einer Seite zu der anderen dieser zwei Ränder verläuft.

7. Vorrichtung nach einem der Ansprüche 1 bis 6, **dadurch gekennzeichnet, dass** der Gurt (4) mindestens drei starre Befestigungsstücke (3) umfasst, die fähig sind, das Gewicht der Last (18) zu stützen, wobei eines im Rücken des Gurts (4) und die beiden anderen zu beiden Seiten angeordnet sind.

8. Vorrichtung nach einem der Ansprüche 1 bis 7, **dadurch gekennzeichnet, dass** die beiden flachen und gekrümmten starren Stangen (1) durch ihr nach oben ausgerichtetes Ende miteinander verbunden sind, um ein einzelnes Element in Form eines umgekehrten Us zu bilden, dessen Querverbindungsarm eine Brücke bildet, die fähig ist, über die Wirbelsäule (9) zu verlaufen und diese zu umgehen.

9. Vorrichtung nach einem der Ansprüche 1 bis 7, **dadurch gekennzeichnet, dass** die beiden flachen und gekrümmten starren Stangen (1) voneinander unabhängig sind und zwei unterschiedliche Elemente bilden, deren nach oben ausgerichtetes Ende frei ist und die Form einer Schaufel aufweist.

## Claims

1. Device allowing an individual (15) to support a load (18), having at least one belt (4), of which one part is flexible and of which a dorsal part (7) is rigid, said belt (4) being equipped with at least one rigid fastening component (3) attached to the said rigid dorsal part (7), said fastening component (3) being able to support the weight of said load (18), the latter having to be carried away from the body of the individual (15) in a cantilevered manner and by way of a support (17) fixed at its proximal end (17₁) to said fastening component (3), the device having at least two flat and curved rigid uprights (1), which are fixed at one of their ends to the rigid dorsal part (7) of the belt (4), and the other ends of which are oriented upwards with respect to said belt, and the shapes of which are designed to conform to and bear on the lumbar curvature (8) of the individual (15) on each side of his spinal column (9).

2. Device according to Claim 1, **characterized in that** it has at least one rigid element (2) in the shape of an inverted U, fixed at its two ends to the rigid dorsal part (7) of the belt (4), surrounding the first rigid elements (1) from above, in the upright position of use, and able to bear on the lumbar muscles of the individual (15).

3. Device according to either of Claims 1 and 2, **characterized in that** the flexible part of the belt (4) is made at least in part of elastic material and has a quick-closure and retention system (4₁) allowing the belt (4) to be placed in the correct position (4') around the waist of the individual (15) .

4. Device according to any one of Claims 1 to 3, **characterized in that** the belt (4) has at least one flexible strap (5) with an upper tightening system (5') intended to be positioned on top of the stomach (10) of the individual (15).

5. Device according to any one of Claims 1 to 4, **characterized in that** the belt (4) has at least one flexible strap (6) with a lower tightening system (6') intended to be positioned below the abdomen of the individual (15).

6. Device according to either of Claims 4 and 5, **characterized in that** the flexible part of the belt (4) is composed of two parts, and it has at least one pliable tightening strap (5 or 6) fixed to the two edges, able to be positioned at the back of the individual (15), of the flexible part of the belt (4) by rings in which it can slide and between which it crosses itself while passing from one side to the other side of these two edges.

7. Device according to any one of Claims 1 to 6, **characterized in that** the belt (4) has at least three rigid fastening components (3) which are able to support the weight of said load (18), one situated at the back of the belt (4) and the two others to either side.

8. Device according to any one of Claims 1 to 7, **characterized in that** the two flat and curved rigid uprights (1) are connected to each other via their upwardly oriented end in order to constitute a single element of inverted U shape, of which the transverse connecting branch forms a bridge able to pass across and enclose the spinal column (9).

9. Device according to any one of Claims 1 to 7, **characterized in that** the two flat and curved rigid uprights (1) are independent of each other and form two distinct elements, their upwardly oriented end being free in the shape of a spatula.
